(19) Europäisches Patentamt / European Patent Office / Office européen des brevets

(11) **EP 3 958 021 A1**

(12) **EUROPEAN PATENT APPLICATION**

(43) Date of publication:
**23.02.2022 Bulletin 2022/08**

(21) Application number: **20275133.5**

(22) Date of filing: **20.08.2020**

(51) International Patent Classification (IPC):
**G02B 1/14** (2015.01)        **G02B 5/18** (2006.01)
**F21V 8/00** (2006.01)        **G02B 27/01** (2006.01)

(52) Cooperative Patent Classification (CPC):
**G02B 1/14; G02B 5/1842; G02B 6/0015;**
**G02B 27/0172;** G02B 6/0093

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **OPTICAL WAVEGUIDE**

(57)    An optical waveguide (100) for a look through display is disclosed. The optical waveguide comprising: a light guiding layer (110), and an anti-contaminant layer (240), wherein the anti-contaminant layer (240) has substantially no impact on the total internal reflection of light at an interface of the light guiding layer (110).

# Fig. 2a

**Description**

BACKGROUND

Optical waveguides may be used in many applications, such as head up displays (HUD), head mounted displays (HMD), and other wearable displays. The optical waveguide in many applications is substantially transparent, such that a user can see a virtual image overlain with real life scenery.

BRIEF DESCRIPTION OF DRAWINGS

Figures 1a and 1b illustrate a simple waveguide.

Figure 2a and 2b illustrate an optical waveguide according to some examples.

Figure 3 illustrates a protected optical waveguide according to some examples.

Figure 4 illustrates a waveguide according to some examples.

DETAILED DESCRIPTION

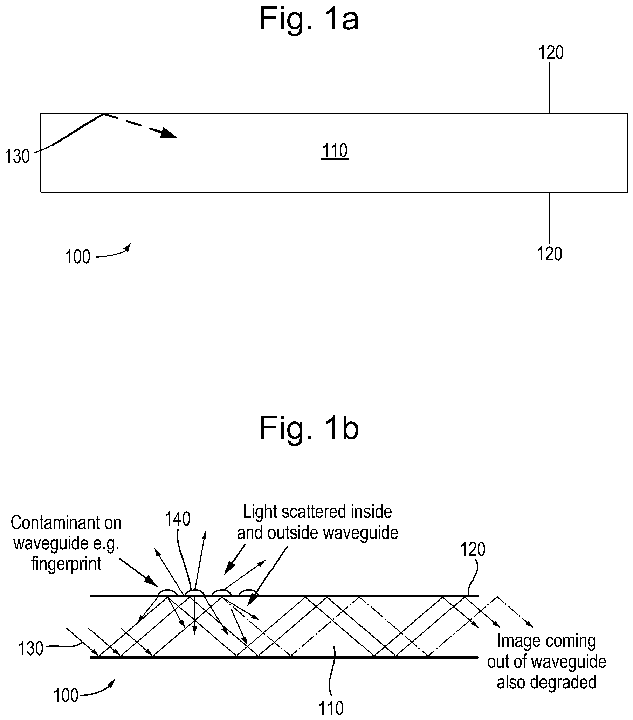

Figure 1a illustrates a simple waveguide 100. The simple waveguide 100 comprises a light guiding layer 110, and an air-waveguide interface 120. The bandwidth of light trapped in the waveguide by total internal reflection (TIR) is limited by the refractive index of the waveguide material ($n_{substrate}$) and air ($n_{air}$) and is defined by

$$\theta_c = \arcsin\left(\frac{n_{air}}{n_{substrate}}\right). \qquad (1)$$

Which, for refractive index values of 1.0 for air and 1.8 for the substrate gives a bandwidth within the waveguide limited to angles $\geq 33.75°$.

Figure 1b illustrates a scenario where the simple waveguide 100 comprises a contaminant 140 on the air-waveguide interface 120. The presence of contaminants 140 on the air-waveguide 120 may cause the interface to be modified, effectively reducing the difference in refractive index and therefore reducing the bandwidth of the simple waveguide 100. This may cause scattering of light both inside and outside the simple waveguide 100 and may cause a degraded image received by the user of the simple waveguide 100. Furthermore, light scattered out of the simple waveguide 100 may reduce the efficiency of the waveguide and the scattered light may be observed by the user. The contaminants may comprise materials introduced onto the simple waveguide 100 from finger prints, such as dust, oil, or skin particles.

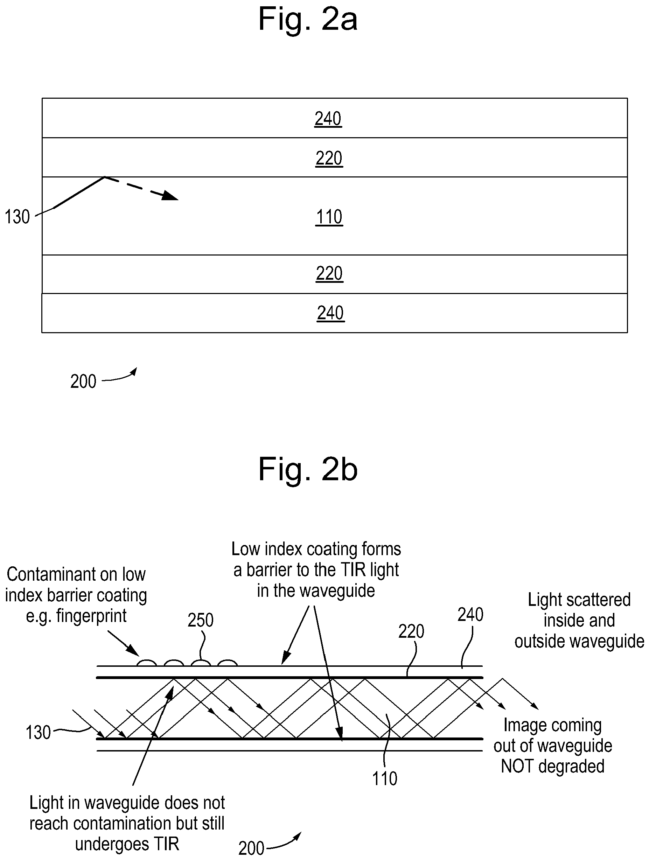

Figure 2a illustrates an optical waveguide 200 according to some examples. The optical waveguide 200 comprises a light guiding layer 110, a coating-waveguide interface 220 and an anti-contaminant layer 240. The anti-contaminant layer protects the waveguide against the presence of contaminants by moving the TIR interface away from the surface which the contaminants may reach.

The properties of the anti-contaminant layer 240 are chosen such that they have little or no impact on the TIR characteristics of the light guiding layer 110 compared to the situation where there is merely an air-waveguide interface. Light 130 is input into the waveguide, and is reflected at the coating-waveguide interface 220 undergoing TIR. As the reflection takes place substantially at the coating-waveguide interface 220 any contaminants on the surface of the anti-contaminant layer 240 have substantially zero effect on the propagation of light in the waveguides. This results in no degradation of the image received by the user of the optical waveguide 200 even if there are contaminants on the anti-contaminant layer 240.

This is illustrated by Figure 2b, which shows how contaminant 250 does not impact the TIR of light, in comparison with Figure 1b.

According to some examples the light guiding layer 110 may have a refractive index ($n_{substrate}$) equal to 1.8 and the refractive index ($n_{coating}$) of the anti-contaminant layer may be 1.2. The bandwidth within the waveguide may be defined by

$$\theta_c = \arcsin\left(\frac{n_{coating}}{n_{substrate}}\right). \qquad (2)$$

Leading to the bandwidth $\geq 41.8°$. Equation 2 is similar to equation 1, except that the $n_{air}$ is replaced by $n_{coating}$. Although the bandwidth is now lower than the waveguide without the coating applied, the waveguide performance is still improved as the anti-contaminant layer protects the optical waveguide 200 from contaminants.

The reduction in bandwidth may be mitigated by choosing a substrate having a higher refractive index, or anti-contaminant coating with lower refractive index. If the refractive index of the light guiding layer 110 is equal to 2.0 and the coating is 1.2, then the bandwidth $\geq 36.9°$.

The anti-contaminant layer 240 may comprise a material having a refractive index that is close to that of air. In some examples the refractive index of the anti-contaminant layer 240 may be substantially between 1.0 and 1.5, however it is not limited to these values, and as explained above a lower refractive index of the anti-contaminant coating is preferable. In some examples the refractive index may between 1.1 and 1.3. A material comprising such a refractive index may comprise a polymer. In some examples the polymer comprises a porous structure. In some examples the polymer may comprise a polymer supplied by Inkron. For example the coating may comprise a siloxane-based coating, such as IOC-560 as supplied by Inkron.

The thickness of the anti-contaminant layer 240 may be controlled to limit evanescent coupling out of the anti-contaminant layer 240. This thickness is dependent upon wavelength and other properties of the anti-contaminant layer 240. In some examples the thickness of the anti-contaminant layer 240 may be at least 1 $\mu$m.

The optical waveguide 200 may be used to present an image to a user in see-through displays, such as HUD or HMD. Therefore the optical waveguide 200 may be required to be substantially transparent to visible wavelengths of light, such that a user may observe the outside world, overlain with the displayed image, through the optical waveguide 200.

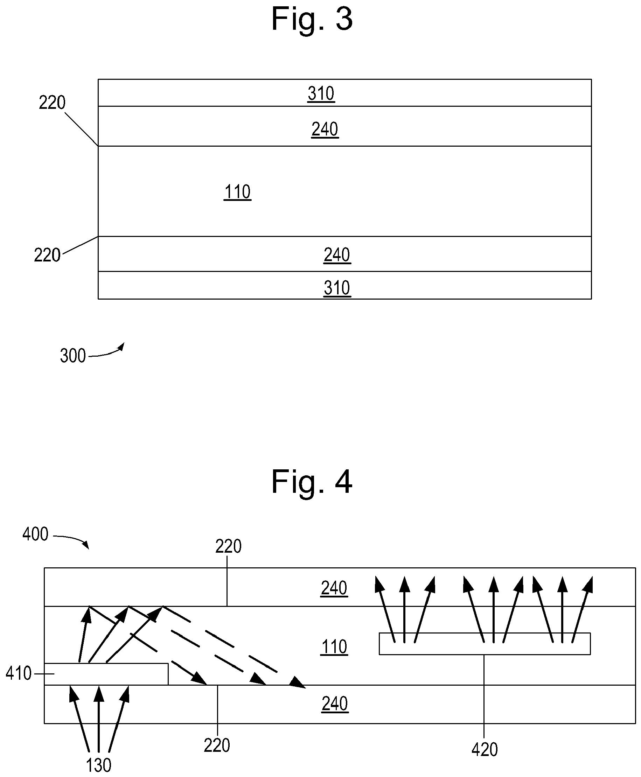

Figure 3 illustrates a protected optical waveguide 300. Protected optical waveguide 300 is substantially similar to optical waveguide 200 and comprises a light guiding layer 110, a coating-waveguide interface 220 and an anti-contaminant layer 240. Protected optical waveguide 300 also comprises a protective layer 310 bonded to the anti-contaminant layer 240. This may be to protect the anti-contaminant layer 240 from damage, as some anti-contaminant layers 240 may not be robust.

The presence of the anti-contaminant layer 240 allows for the refractive index of the protective layer 310 to be higher or equal to the anti-contaminant layer or the light guiding layer. This is because light 130 is reflected at the coating-waveguide interface 220, and so any material on the anti-contaminant layer will have substantially no impact on the containment of the waveguide. Without the anti-contaminant layer 240 an air gap is required before any protective layer 310, as otherwise light would no longer undergo TIR.

In some examples the protective layer 310 may be bonded to the waveguide using an optically transparent glue. The protective layer 310 is not required to be flat.

The protected waveguide 300 may also be used to present an image to a user in see-through displays, such as HUD or HMD, and therefore may be required to be substantially transparent to visible wavelengths of light, such that a user may observe the outside world, overlain with the displayed image, through the optical waveguide 200.

In some examples the optical waveguide 200 or protected waveguide 300 may comprise surface relief gratings. Applying an anti-contaminant layer 240 to the surface relief coating may also enhance the performance of the grating, such as more accurately controlling the efficiency of the grating.

Figure 4 illustrates a waveguide 400 according to some examples. Waveguide 400 comprises a light guiding layer 110 and an anti-contaminant layer 240. TIR happens at the coating-waveguide interface 220. Light 130 is coupled into the waveguide 400 with a range of field angles via input diffractive element 410 which diffracts the light 130 into the waveguide under TIR in a second range of field angles at the coating-waveguide interface 220. The light is then diffracted out of the waveguide by second diffractive element 420 to the original range of angles.

Figure 4 illustrates the first diffractive element 410 as being a surface relief grating, however it is to be understood that the first diffractive element 410 may comprise a surface or an embedded grating. Furthermore, the grating may operate in a reflective mode or a transmissive mode.

Figure 4 illustrates the second diffractive element 420 as being an embedded grating, however it is to be understood that the second diffractive element 420 may comprise a surface relief grating or an embedded grating. Furthermore, the grating may operate in a reflective mode or a transmissive mode.

Additional substrates may be bonded onto the exterior surfaces of waveguide 400.

In some examples the grating pitch of the gratings may be 400 nm and the source wavelength of light may be 532 nm. The source total field of view may be 30° such that the range of field angles in air are $\pm$ 15°. The refractive index of the substrate may be 1.8, such that the range of the field angles in the substrate may be $\pm$ 8.3°. After the passing through the first diffractive element 410 the range of field angles in the substrate is +36.3° to +61.6°. therefore, in order to enable optical isolation the $n_{coating}$ should be sufficiently low such that the field of view bandwidth is maintained.

Rearranging equation 2 leads to

$$n_{coating} = n_{substrate} \, \sin(\theta_c) \qquad (3)$$

Such that $n_{coating}$ should be less than or equal to 1.07. A material comprising such a refractive index may comprise a polymer. In some examples the polymer comprises a porous structure. In some examples the polymer may comprise a siloxane-based polymer supplied by Inkron.

**Claims**

1.  An optical waveguide for a look through display, the optical waveguide comprising:
    a light guiding layer, and an anti-contaminant layer, wherein the anti-contaminant layer has substantially no impact on the total internal reflection of light at an interface of the light guiding layer.

2.  The optical waveguide according to claim 1, wherein a refractive index of the anti-contaminant layer is between approximately 1.0 and 1.5.

3.  The optical waveguide according to claim 1, wherein a refractive index of the anti-contaminant layer is between approximately 1.1 and 1.3.

4.  The optical waveguide according to any preceding claim , wherein a thickness of the anti-contaminant layer is greater than approximately 1 $\mu$m.

5.  The optical waveguide according to any preceding claim, wherein the anti-contaminant layer comprises a polymer layer.

6.  The optical waveguide according to any preceding claim, wherein the anti-contaminant layer comprises a protective layer bonded to the anti-contaminant layer.

7.  The optical waveguide according to claim 6, wherein the refractive index of the protective layer is greater than the refractive index of the anti-contaminant layer.

8.  The optical waveguide according to claim 7, wherein there is substantially no air gap between the protective layer and the anti-contaminant layer.

9.  The optical waveguide according to any preceding claim comprising a surface relief grating wherein the anti-contaminant layer at least partially covers the surface relief grating.

10. A head up display or head worn display comprising an optical waveguide according to any preceding claim.

# Fig. 1a

120

130

110

120

100

# Fig. 1b

Contaminant on
waveguide e.g.
fingerprint

140

Light scattered inside
and outside waveguide

120

130

Image coming
out of waveguide
also degraded

100

110

# Fig. 3

| | 310 |
|---|---|
| 220 | 240 |
| | 110 |
| 220 | 240 |
| | 310 |

300

# Fig. 4

400

220

240

110

410

240

220

130

420

# Fig. 2a

| | |
|---|---|
| 240 | |
| 220 | |
| 130 | 110 |
| 220 | |
| 240 | |

200

# Fig. 2b

Contaminant on low index barrier coating e.g. fingerprint

Low index coating forms a barrier to the TIR light in the waveguide

250

220    240

Light scattered inside and outside waveguide

130

Light in waveguide does not reach contamination but still undergoes TIR

110

Image coming out of waveguide NOT degraded

200

Europäisches
Patentamt

European
Patent Office

Office européen
des brevets

**EUROPEAN SEARCH REPORT**

Application Number

EP 20 27 5133

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/121126 A1 (BAE SYSTEMS PLC [GB]) 25 April 2019 (2019-04-25) * figures 2, 3, 4, 5 * * paragraphs [0030] - [0034], [0059] - [0062] * * claim 1 * | 1,2,4-6, 8-10 | INV. G02B1/14 G02B5/18 F21V8/00 G02B27/01 |
| X | US 2018/011324 A1 (POPOVICH MILAN MOMCILO [GB]; WALDERN JONATHAN DAVID [US] ET AL.) 11 January 2018 (2018-01-11) * figures 28, 29, 30, 31 * * paragraphs [0093] - [0099] * | 1-5,10 | |
| X | US 2019/101761 A1 (IHMELS DARREN [CA]) 4 April 2019 (2019-04-04) * figure 4 * * paragraph [0044] * | 1,4-8 | |

TECHNICAL FIELDS
SEARCHED      (IPC)

G02B

The present search report has been drawn up for all claims

| Place of search | Date of completion of the search | Examiner |
|---|---|---|
| The Hague | 24 November 2020 | Vida, Gyorgy |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&  : member of the same patent family, corresponding
document

EPO FORM 1503 03.82 (P04C01)

**EP 3 958 021 A1**

## ANNEX TO THE EUROPEAN SEARCH REPORT
## ON EUROPEAN PATENT APPLICATION NO.

EP 20 27 5133

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2020

| Patent document cited in search report | | Publication date | Patent family member(s) | | Publication date |
|---|---|---|---|---|---|
| US 2019121126 | A1 | 25-04-2019 | AU | 2017252480 A1 | 01-11-2018 |
| | | | EP | 3446173 A1 | 27-02-2019 |
| | | | JP | 6780014 B2 | 04-11-2020 |
| | | | JP | 2019517021 A | 20-06-2019 |
| | | | KR | 20180130580 A | 07-12-2018 |
| | | | US | 2019121126 A1 | 25-04-2019 |
| | | | WO | 2017182771 A1 | 26-10-2017 |
| US 2018011324 | A1 | 11-01-2018 | CN | 107873086 A | 03-04-2018 |
| | | | CN | 111323867 A | 23-06-2020 |
| | | | EP | 3245444 A1 | 22-11-2017 |
| | | | US | 2018011324 A1 | 11-01-2018 |
| | | | US | 2020064637 A1 | 27-02-2020 |
| | | | WO | 2016113534 A1 | 21-07-2016 |
| US 2019101761 | A1 | 04-04-2019 | US | 2019101761 A1 | 04-04-2019 |
| | | | US | 2019101762 A1 | 04-04-2019 |
| | | | US | 2019101763 A1 | 04-04-2019 |

EPO FORM P0459

For more details about this annex : see Official Journal of the European Patent Office, No. 12/82